# EUROPÄISCHE PATENTSCHRIFT

(11) **EP 2 338 847 B1**
(45) Veröffentlichungstag und Bekanntmachung des Hinweises auf die Patenterteilung: **31.10.2018**
(21) Anmeldenummer: 10171054.9
(22) Anmeldetag: 28.07.2010
(51) Int. Cl.: C03C 3/087, C03C 3/112, C03C 4/20

(54) **Borfreies Glas**
Boron-free glass
Verre sans bore

(30) Priorität: 28.10.2009 DE 102009051852
(43) Veröffentlichungstag der Anmeldung: 29.06.2011
(73) Patentinhaber: Schott AG, 55122 Mainz (DE)
(72) Erfinder: Brix, Peter, 55116, Mainz (DE)
(74) Vertreter: Witte, Weller & Partner Patentanwälte mbB

(56) Entgegenhaltungen:
- JP-A- 11 240 733
- SU-A1- 631 471
- US-A1- 2009 103 040

## Beschreibung

Die Erfindung betrifft ein borfreies Glas, vorzugsweise ein Neutralglas, das ohne den Zusatz von borhaltigen Rohstoffen erschmolzen werden kann.

Unter dem Begriff "Neutralglas" werden Gläser mit sehr guter hydrolytischer Beständigkeit und sehr guter Säurebeständigkeit verstanden. Da diese Gläser also "neutral" wirken, indem sie kaum Glasbestandteile an die Lösungen abgeben, können sie u.a. als Primärverpackungsmaterialien in der Pharmaindustrie, insbesondere für Injektionslösungen, eingesetzt werden.

In Tab. 1 sind die Klasseneinteilungen von Gläsern im Hinblick auf die chemische Beständigkeit gegenüber Wasser, Säuren und Laugen nach den verschiedenen Normen zusammengefasst.

**Tab. 1**

| Beständigkeit gegen... | Wasser (H) | Säure (S) | Lauge (L) |
|---|---|---|---|
| Norm | DIN ISO 719 | DIN 12116 | DIN ISO 695 |
| Lösung | Dest. H₂O | 6n HCl (halbkonz.) | 0,5m Na₂CO₃ + 0,5m NaOH |
| Temperatur | 98°C | 108°C | 102°C |
| Dauer | 1 Std | 6 Std | 3 Std |
| Einheit | µg Na₂O / g Glas | mg/dm² | mg/dm² |
| Klasse 1 | bis 31 | bis 0,7 | bis 75 |
| Klasse 2 | bis 62 | bis 1,5 | bis 175 |
| Klasse 3 | bis 264 | bis 15 | über 175 |
| Klasse 4 | bis 620 | über 15 | |
| Klasse 5 | über 620 | | |

Die bekannten kommerziellen Neutralgläser, wie z.B. SCHOTT FIOLAX® 8412 und 8414 oder SCHOTT DURAN® 8330 der Schott AG, Mainz, werden in die Familie der Borosilicatgläser eingeordnet, da sie über 8% B₂O₃ enthalten. Es sind Gläser in der ersten hydrolytischen und Säureklasse und in der zweiten Laugenklasse, hier kurz als "1-1-2 Glas" bezeichnet.

Obwohl das Boroxid im SCHOTT FIOLAX® 8412 nur zu etwa 11% vorliegt, verursacht der Rohstoff Dinatriumtetraborat-Pentahydrat etwa die Hälfte der gesamten Rohstoffkosten. Noch ungünstiger stellt sich die Rohstoffsituation für Borosilicatgläser ohne Natriumoxid dar, z.B. alkalifreie Gläser für LCD-Anzeigen, weil hier der viel teurere Rohstoff Boroxid (Borsäure) eingesetzt werden muss, der technisch erst aus Borax gewonnen werden muss. Die Kosten für die Glaskomponente B₂O₃ aus dem Rohstoff Boroxid liegen siebenmal höher als die Kosten für B₂O₃ aus dem Rohstoff Dinatriumtetraborat-Pentahydrat.

Die EU (Europäische Union) stuft Borsäure, Dibortrioxid, Dinatriumtetraborat-Anhydrit, Dinatriumtetraborat-Decahydrat und Dinatriumtetraborat-Pentahydrat neuerdings als reproduktionstoxisch ein. Dies hat zur Folge, dass bei der Herstellung unter Verwendung von solchen Rohstoffen bestimmte Randbedingungen einzuhalten bzw. bestimmte Vorsichtsmaßnahmen zu treffen sind.

Wegen der relativ hohen Kosten borhaltiger Rohstoffe, der absehbaren Verknappung geeigneter Qualitäten sowie der aktuellen Diskussion zur Neueinstufungen der Toxizität von Borverbindungen sind borfreie Gläser als Alternative zu den Borosilicatgläsern von Interesse.

Neben der sehr guten chemischen Beständigkeit werden an Neutralgläser allerdings noch weitere Anforderungen gestellt.

So muss das Glas in herkömmlichen Schmelzaggregaten produzierbar sein, d.h. die Viskosität der Schmelze darf nicht zu hoch liegen - keinesfalls sollte die Verarbeitungstemperatur (Temperatur bei der die Viskosität 10⁴dPas beträgt, auch als VA oder T4 bezeichnet) den Maximalwert von 1320°C überschreiten. T4 sollte für eine energiesparende Produktion möglichst niedrig liegen.

Für den Einsatz als Pharmaprimärpackmittel ist die thermische Ausdehnung im Bereich von 20 °C bis 300 °C zwar nicht von besonderer Wichtigkeit, dennoch sollte ein Wert von etwa 5,0 · 10⁻⁶K⁻¹ angestrebt werden, um eine vergleichbare Temperaturwechselfestigkeit wie die der bekannten Neutralgläser wie SCHOTT FIOLAX® 8412 einzustellen. Außerdem können Gläsern mit dieser thermischen Dehnung auch als sogenannte Einschmelzgläser in der Elektrotechnik verwendet werden, da einige Metalle und Legierungen ebenfalls in diesem Dehnungsbereich liegen und somit stabile Glas-Metall-Verbunde, z.B. Durchführungen, möglich sind. Bei der Verwendung von Fe-Ni-Co-Legierungen wie VACON® mit einem thermischen Ausdehnungskoeffizienten α im Bereich von 20°C bis 300°C von 5,4·10⁻⁶K⁻¹, Zirkonium (α_{20/300} = 5,9·10⁻⁶K⁻¹) oder Zirkoniumlegierungen werden als Einschmelzgläser für Glas-Metall-Verschmelzungen Gläser mit einem Ausdehnungskoeffizienten α_{20/300} zwischen 5 und 6·10⁻⁶K⁻¹ benötigt.

Im Stand der Technik sind zwar eine Reihe von borfreien Gläsern bekannt, jedoch sind diese im Wesentlichen nicht als Neutralgläser im Sinne der vorliegenden Definition geeignet.

Aus der WO 96/39362 ist ein Glas für borfreie Glasfasern bekannt, mit 59 bis 62 Gew.-% SiO₂, 20 bis 24 Gew.-% CaO, 12 bis 12 Gew.-% Al₂O₃, 1 bis 4 Gew.-% MgO, 0 bis 0,5 Gew.-% F₂, 0,1 bis 2 Gew.-% Na₂O, 0 bis 0,9 Gew.-% TiO₂, 0 bis 0,5 Gew.-% Fe₂O₃, 0 bis 2 Gew.-% K₂O und 0 bis 0,5 Gew.-% SO₃.

Ein derartiges Glas ist zwar zur Herstellung von kontinuierlichen Glasfasern geeignet, erfüllt jedoch nicht die Anforderungen, die an ein Neutralglas gestellt werden.

Aus der US 5,508,237 ist ein Flachglas-Display mit einem Aluminosilikatglas bekannt, das einen Gewichtsverlust von weniger 2,5 mg/cm² nach 24 Stunden Eintauchen in einer 5 %igen wässrigen Lösung von HCL bei 95°C aufweist. Das Glas weist 49 bis 67 Gew.-% SiO₂, wenigstens 6 Gew.-% Al₂O₃ auf, wobei Al₂O₃ 6 bis 14 Gew.-% in Verbindung mit 55 bis 67 Gew.-% SiO₂ ist und 6 bis 23 Gew.-% in Verbindung mit 49 bis 58 Gew.-% SiO₂ ist. Der Summengehalt von SiO₂ und Al₂O₃ ist größer als 68 %. Ferner sind 0 bis weniger als 8 Gew.-% B₂O₃ enthalten, wenigstens ein Erdalkalimetalloxid, nämlich 0 bis 21 Gew.-% BaO, 0 bis 15 Gew.-% SrO, 0 bis 7,1 Gew.-% CaO, 0 bis 8 Gew.-% MgO, wobei der Summengehalt aus BaO + CaO + SrO + MgO 12 bis 30 Gew.-% beträgt.

Das Glas besitzt zum einen keine ausreichende Säurebeständigkeit und enthält außerdem zumindest Strontiumoxid oder Bariumoxid und ggf. auch Boroxid. Es ist also somit nicht als borfreies Neutralglas geeignet.

Aus der DE 10 2004 036 523 A1 ist ein Glassubstrat für ein Display bekannt, das aus einem Glas mit 40 bis 70 Gew.-% SiO₂, 2 bis 25 Gew.-% Al₂O₃, 0 bis 20 Gew.-% B₂O₃, 0 bis 10 Gew.-% MgO, 0 bis 15 Gew.-% CaO, 0 bis 10 Gew.-% SrO, 0 bis 30 Gew.-% BaO, 0 bis 10 Gew.-% ZnO, 0 bis 25 Gew.-% R₂O (Li₂O, Na₂O, K₂O) besteht, 0,4 Gew.% As₂O₃, 0 bis 3 Gew.-% Sb₂O₃ und 0,01 bis 1 Gew.-% SnO₂. Das Glas soll zur Herstellung von Flachglas im Downdraw-Verfahren geeignet sein. Um eine hohe Säurebeständigkeit sowie einen geringen thermischen Ausdehnungskoeffizienten zu erhalten, beträgt der Gehalt an SiO₂ bevorzugt 57 bis 64 Gew.-%. Um eine Herstellung im Downdraw-Verfahren oder im Rotationsverfahren, Nachzugverfahren oder dergleichen zu ermöglichen, muss das Glas eine ausreichende Fließfähigkeit aufweisen, weshalb bevorzugt 5 bis 15 Gew.-% B₂O₃, besonders bevorzugt 7,5 bis 11 Gew.-% B₂O₃ zugesetzt sind. Ferner enthält das Glas vorzugsweise Strontiumoxid und Bariumoxid.

Ein derartiges Glas ist somit nicht als borfreies Neutralglas geeignet, das neben einer hohen Säurebeständigkeit auch eine hohe hydrolytische Beständigkeit und Laugenbeständigkeit aufweisen muss.

Aus der US 5,854,153 ist ein Glassubstrat für eine elektronische Anzeige bekannt, bei dem das Glas 42 bis 62 Gew.-% SiO₂, 16,5 bis 28 Gew.-% Al₂O₃, 0 bis 4 Gew.-% B₂O₃, 3 bis 10 Gew.-% Na₂O, 1 bis 11 Gew.-% K₂O, 0 bis 6 Gew.-% MgO, 9,5 bis 24 Gew.-% CaO, 0,2 bis 8 Gew.-% SrO, 0 bis 16 Gew.-% BaO, 0 bis 4 Gew.-% ZrO₂ und einen Alkalisummengehalt von 4 bis 16 Gew.% aufweist.

Ein derartiges Glas weist wegen des niedrigen Gehaltes an SiO₂ keine ausreichende chemische Beständigkeit auf.

Aus der EP 1 074 521 A2 ist ferner eine borfreie Glaszusammensetzung für ein Filtermedium bekannt, mit 62 bis 68 Mol-% SiO₂, 2 bis 6 Mol-% Al₂O₃, 10 bis 16 Mol-% Na₂O, 0 bis 6 Mol-% K₂O, 0 bis 6 Mol-% Li₂O, 3 bis 10 Mol-% CaO, 0 bis 8 Mol-% MgO, 0 bis 3 Mol-% BaO, 2 bis 6 Mol-% ZnO, 0 bis 2 Mol-% TiO₂, 0 bis 2 Mol-% F₂, wobei der Summenalkaligehalt kleiner als 18 Mol-% ist.

Das Glas ist besonders zur Herstellung von HEPA-Reinraumfiltern geeignet, die aus Glasfasern bestehen. Das Glas muss hierfür eine relativ gute Säurebeständigkeit aufweisen, wobei jedoch die hydrolytische Beständigkeit und die Laugenbeständigkeit nicht im Vordergrund stehen.

Das bekannte Glas besitzt in der Praxis einen zu niedrigen Anteil an Aluminiumoxid und einen zu hohen Anteil an Alkalimetallen, um als borfreies Neutralglas geeignet zu sein.

Aus der WO 2008/143999 A1 ist ein Alkalialuminosilikatglas bekannt, das 64 bis 68 Mol-% SiO₂, 12 bis 16 Mol-% Na₂O, 8 bis 12 Mol-% Al₂O₃, 0 bis 3 Mol-% B₂O₃, 2 bis 5 Mol-% K₂O, 4 bis 6 Mol-% MgO, 0 bis 5 Mol-% CaO aufweist. Dabei liegt der Summengehalt von SiO₂ + B₂O₃ + CaO zwischen 66 und 69 Mol-%, der Summengehalt von Na₂O + K₂O + B₂O₃ + MgO + CaO + SrO ist größer als 10 Mol-%. Der Summengehalt von MgO + CaO + SrO liegt zwischen 5 und 8 Mol-%. Die Differenz aus dem Summengehalt von Na₂O + B₂O abzüglich des Gehaltes von Al₂O₃ soll größer als 2 Mol-% sein, die Differenz von Na₂O - Al₂O₃ soll zwischen 2 und 6 Mol-% liegen. Die Differenz aus dem Summengehalt von Na₂O + K₂O abzüglich des Gehaltes an Al₂O₃ soll zwischen 4 und 10 Mol-% liegen.

In der Praxis besitzt das Glas einen zu großen Gehalt an Natriumoxid und an Kaliumoxid, um als Neutralglas geeignet zu sein.

Aus der SU 631471 A1 ist ein Glas bekannt, das zur Herstellung von säure- und wasserbeständigen Erzeugnissen insbesondere als hitzebeständiges Isolierglas mit hoher Verformungstemperatur verwendet werden soll. Dieses Glas weist (in Gew.-%) 66,4-68,5 SiO₂, 14,2-14,8 Al₂O₃, 7,9-9,9 CaO, 4,6-4,8 MgO, 1,0-2,1 BaO, 0,9-1,0 LiO₂ und 1,9-2,9 Na₂O auf.

Aus der JP 11 240733 A ist ferner eine hochschmelzende Glaszusammensetzung bekannt, die insbesondere für Substrate für Flachdisplays vorgesehen ist. Die betreffende Glaszusammensetzung weist (in Gew.-%) 56-73 SiO₂, 0-15 Al₂O₃, 0-10 MgO, 0-15 CaO, 0-8 Na₂O, 0-14 K₂O auf, wobei der Summengehalt von SiO₂ und Al₂O₃ 68-73 beträgt, der Summengehalt von MgO und CaO 13-25 beträgt, der Summengehalt von Na₂O und K₂O 2-15,5 beträgt und der Summengehalt von MgO, CaO, Na₂O und K₂O 27-32 betragen soll.

Vor diesem Hintergrund liegt der Erfindung die Aufgabe zugrunde, ein boroxidfreies Glas zu offenbaren, das eine ausreichende chemische Beständigkeit aufweist, so dass es möglichst als Neutralglas geeignet ist, und das in herkömmlichen Schmelzanlagen bei möglichst nicht zu hohen Schmelztemperaturen produzierbar ist.

Diese Aufgabe wird durch ein Glas gelöst, das zumindest die folgenden Bestandteile (in Gew.-% auf Oxidbasis) enthält:

| | |
|---|---|
| SiO₂ | 65 - 72 |
| Al₂O₃ | 11 - 17 |
| Na₂O | 0,1 - 8 |
| MgO | 3 - 8 |
| CaO | 7,1 - 12 |
| ZnO | 0 - 10, |
| BaO | ≤ 0,5 |

wobei das Gewichtsverhältnis CaO/MgO 1,4 bis 1,8 beträgt,
wobei bis auf unvermeidbare Verunreinigungen kein B₂O₃, SrO, BaO, ZrO₂ und PbO enthalten ist,
wobei eine hydrolytische Beständigkeit nach DIN ISO 719 in der 1. hydrolytischen Klasse gegeben ist,
wobei eine Säurebeständigkeit nach DIN 12116 mindestens in der 2. Säureklasse gegeben ist und
wobei eine Laugenbeständigkeit nach DIN ISO 695 in mindestens der 2. Laugenklasse gegeben ist.

Die Aufgabe der Erfindung wird ferner durch ein Glas gelöst, das zumindest die folgenden Bestandteile (in Gew.-% auf Oxidbasis) enthält:

| | |
|---|---|
| SiO₂ | 65 - 72 |
| Al₂O₃ | 11 - 17 |
| Na₂O | 0-8 |
| K₂O | 0-2 |
| MgO | 3-8 |
| CaO | 7,1 - 12 |
| ZnO | 0 - 10, |
| BaO | ≤ 0,5 |

wobei das Gewichtsverhältnis CaO/MgO 1,4 bis 1,8 beträgt,
wobei bis auf unvermeidbare Verunreinigungen kein B₂O₃, SrO, BaO, ZrO₂ und PbO enthalten ist,
wobei eine hydrolytische Beständigkeit nach DIN ISO 719 in der 1. hydrolytischen Klasse gegeben ist,
wobei eine Säurebeständigkeit nach DIN 12116 in der 1. Säureklasse gegeben ist und
wobei eine Laugenbeständigkeit nach DIN ISO 695 in mindestens der 2. Laugenklasse gegeben ist.

Die Aufgabe der Erfindung wird auf diese Weise vollkommen gelöst.

Unter unvermeidbarer Verunreinigung wird in diesem Zusammenhang eine Verunreinigung verstanden, wie sie durch unreine Rohstoffe unvermeidbar entstehen kann. Je nach Reinheit der verwendeten Rohstoffe wird darunter eine Verunreinigung von höchstens 0,5 Gew.% und bevorzugt von höchstens 0,1 Gew.-% verstanden.

Die erfindungsgemäßen Gläser sind borfrei, strontiumfrei und bariumfrei und besitzen eine hohe chemische Beständigkeit. Die hydrolytische Beständigkeit liegt in der Klasse 1, während die Laugenbeständigkeit und die Säurebeständigkeit in der Klasse 1 oder 2 liegen.

Die erfindungsgemäßen Gläser weisen bevorzugt eine Verarbeitungstemperatur T4 (Termperatur bei einer Viskosität der Glasschmelze von 10⁴ dPas) von weniger als 1320°C, weiter bevorzugt von weniger als 1300°C, besonders bevorzugt von weniger als 1260°C auf.

Auf diese Weise ist eine gute Herstellbarkeit bei niedrigen Energiekosten geleistet.

Weiter zeichnen sich die erfindungsgemäßen Gläser durch eine gute Schlieren- und Blasenqualität und eine hohe Entglasungsstabilität aus.

Wegen des Verzichtes auf die teuren Rohstoffe Borax, Borsäure und Magnesiumcarbonat lassen sich die erfindungsgemäßen Gläser zu deutlich geringeren Kosten als bekannte Neutralgläser auf der Basis von Borosilikatgläsern herstellen.

Der thermische Ausdehnungskoeffizient α_{20/300} liegt im bevorzugten Bereich von etwa 5·10⁻⁶ K⁻¹.

Die erfindungsgemäßen Gläser weisen einen Mindestgehalt von 65 Gew.-% SiO₂ auf, was Voraussetzung ist für eine hohe Säurebeständigkeit ist. Wird der Maximalgehalt von 72 Gew.-% überschritten, so steigt die Verarbeitungstemperatur auf Werte über 1320°C an, die Schmelze ist somit zu zäh, um wirtschaftlich in herkömmlichen Schmelzaggregaten produzierbar zu sein.

Aluminiumoxid wirkt stabilisierend und erhöht die chemische Beständigkeit, indem Alkali- und Erdalkaliionen fest an die Glasstruktur eingebunden werden. Es ist im erfindungsgemäßen Glas in Mengen von 11 bis 17 Gew.-%, bvorzugt von 14 bis 17 Gew.-%, weiter bevorzugt von 15 bis 17 Gew.-% enthalten. Bei geringeren Gehalten würden sich die Kristallisationsneigung und die Verdampfung von Gaskomponenten bei den hohen Schmelztemperaturen in der Wanne entsprechend erhöhen. Zu hohe Gehalte würden sich nachteilig in einer Erhöhung der Verarbeitungs- und Schmelztemperaturen bemerkbar machen.

Der Zusatz von Alkalioxiden führt zu niedrigeren Schmelztemperaturen, andererseits wird der thermische Ausdehnungskoeffizient erhöht, weshalb nur relativ geringe Mengen eingesetzt werden.

Der Gehalt an Na₂O beträgt vorzugsweise 0,5 bis 8 Gew.-%, weiter bevorzugt 1 bis 8 Gew.-%, weiter bevorzugt 2 bis 8 Gew.-%, besonders bevorzugt 2 bis 6 Gew.-%.

Die erfindungsgemäßen Gläser können 0 bis 2 Gew.-%, vorzugsweise 0,1 bis 2 Gew.% Li₂O enthalten.

Anstelle oder zusätzlich zu von Na₂O können prinzipiell auch die beiden anderen Alkalioxide Li₂O und K₂O verwendet werden, jedoch ist aus Kostengründen Na₂O vorzuziehen. Außerdem führen K₂O-haltige Schmelzen teilweise zu erhöhter Wannensteinkorrosion. Schließlich enthalten alle natürlich vorkommenden kaliumhaltigen Rohstoffe das radioaktive Isotop ⁴⁰K, was für einige elektrotechnische Anwendungen nicht gewünscht ist.

Der Gehalt an K₂O wird daher erfindungsgemäß auf 0 bis 2 Gew.-% begrenzt, soweit kein Na₂O verwendet wird, vorzugsweise auf 0,1 bis 2 Gew.-% K₂O.

Zur Erhöhung der thermischen Dehnung und Absenkung der Viskosität der Schmelze (sog. Flussmittel) enthalten die Gläser die beiden Erdalkalioxide MgO und CaO. Besonders entglasungsstabile und chemisch beständige Gläser erhält man, wenn das Verhältnis von CaO zu MgO (auf Gewichtsprozentbasis) zwischen 1,4 und 1,8 liegt. Ausgedrückt in molaren Anteilen soll das Verhältnis von CaO zu MgO 1,0 bis 1,6 betragen. Bei einem (Gewichts)Verhältnis CaO/MgO größer 1,4 können die kostengünstigen Rohstoffe Dolomit und Kalk verwendet werden, ohne dass zusätzlich der teure Rohstoff MgCO₃ (oder gar noch teurere magnesiumhaltige Rohstoffe) eingesetzt werden muss. Da MgO wesentlich effektiver in der Absenkung von T4 ist als CaO sollte das Verhältnis CaO/MgO den Wert von 1,8 nicht überschreiten.

Der Gehalt an CaO beträgt vorzugsweise 7,1 bis 12 Gew.-%, weiter bevorzugt 8 bis 12 Gew.-%, besonders bevorzugt 8 bis 11 Gew.-%.

Auf eine Zugabe der Erdalkalioxide SrO und BaO wird vorzugsweise verzichtet, da diese Komponenten toxikologisch nicht ganz unbedenklich sind und es, besonders bei der Anwendung als Pharmaprimärpackmittel, zu wolkigen Ausfällungen mit Lösungen einiger spezieller, meist schwefelhaltiger Wirkstoffe (Sulfate, Sulfone und dergl.) kommen kann.

Auf den Einsatz von Bleioxid PbO wird vorzugsweise aus toxikologischen Gründen verzichtet.

Der Gehalt an ZnO kann vorzugsweise 3 bis 4 Gew.-% betragen. Weiter bevorzugte Bereiche sind 4 bis 10 Gew.-% und 6 bis 10 Gew.-%.

Ein Zusatz von Zinkoxid ZnO wirkt als Flussmittel. Es können bis zu 10 Gew.-% im Glas enthalten sein, vorzugsweise mindestens 0,1 Gew.-%. Nachteilig bei der Verwendung dieser Komponente ist die Neigung zur Verdampfung mit anschließender Kondensation der Verdampfungsprodukte, was, besonders bei dem Floatverfahren, zu unerwünschten Glasfehlern auf der Oberfläche der Glaspartikel führen kann.

Die erfindungsgemäßen Gläser können ferner 0 bis 10 Gew.-%, vorzugsweise 1 bis 10 Gew.-% TiO₂ enthalten.

Zusätze von Titanoxid TiO₂ können die hydrolytische Beständigkeit der Gläser verbessern und bewirken stets eine verstärkte Absorption von UV-Strahlung. Es führt jedoch auch zu erhöhten Gemengepreisen und ist als Glaskomponente in einigen Anwendungen nicht erwünscht. Außerdem wird oftmals die Ausbildung einer braunen Farbe beobachtet, was für einige Anwendungen störend ist. Diese Färbung ist um so ausgeprägter, je mehr Eisenoxid, über die Rohstoffe oder den Wiedereinsatz von Scherben, in das Glas eingeschleppt wird. Je nach Anwendungsfall wird auf den Einsatz von Titanoxid ganz verzichtet.
Die erfindungsgemäßen Gläser können ferner 0,0 bis 10 Gew.-%, gegebenfalls 1 bis 10 Gew.-% ZrO₂ enthalten.
Ein Zusatz von Zirkonoxid verbessert in starken Maße die Laugenbeständigkeit der Gläser, was jedoch für die meisten Anwendungen nicht von besonders großer Relevanz ist. Auf den Einsatz von Zirkonoxid kann auch ganz verzichtet werden, da bei dessen Einsatz die Gemengekosten steigen, das Aufschmelzverhalten des Gemenges sich besonders bei alkaliarmen Zusammensetzungen verschlechtert, die Viskosität der Schmelze ansteigt und es als Schwermetall in einigen Anwendungen nicht erwünscht ist.
Auch wenn im Labormaßstab ohne Zusatz von Läutermitteln blasen- und schlierenfreie Gläser erzielt werden, können die erfindungsgemäßen Gläser 0,01 bis 2 Gew.-%, vorzugsweise 0,1 bis 1,5 Gew.-% an Läutermitteln für die großtechnische Produktion enthalten.
Es können in Summe bis zu 1,5 Gew.-% As₂O₃, Sb₂O₃, SnO₂, CeO₂, MnO₂, Fe₂O₃, Cl⁻ (z. B. als NaCl oder ZnCl₂), F⁻ (z.B. als CaF₂ oder MgF₂) und/oder Sulfat (z. B. als Na₂SO₄ oder ZnSO₄) als Läutermittel zugegeben werden.

Durch den Zusatz von Fluorid wird die Viskosität der Schmelze erniedrigt, was die Läuterung beschleunigt. Aus Umweltschutzgründen sollte möglichst auf den Zusatz von As₂O₃ oder Sb₂O₃ verzichtet werden.

Durch die Zugabe von Chloriden oder Fluoriden als Läuterungsmittel wird die Säurebeständigkeit des Glases tendenziell verschlechtert. Außerdem kann eine Zugabe von Chloriden in Neutralgläsern dazu führen, dass bei jeder Erwärmung Chlorid verdampft und anschließend auf den Glasprodukten kondensiert. Eine Zugabe von Fluoriden führt zwar zur Absenkung der Verarbeitungstemperatur T4, jedoch wird auch hier die Säurebeständigkeit dadurch leicht verschlechtert. Auch können sich durch Zusatz von Chlorid Verdampfungs- bzw. Kondensationserscheinungen ergeben. Schließlich kann die Wannenbeständigkeit durch Fluoridzusätze beeinträchtigt werden.

Aus diesem Grunde wird der Zusatz von für Chlorid und Fluorid als Läutermittel auf maximal 1,5 Gew.-% Chlorid bzw. Fluorid begrenzt.

Die erfindungsgemäßen Gläser eignen sich als borfreie Neutralgläser, die herkömmliche borhaltige Neutralgläser vollständig ersetzen können.

Bevorzugte Verwendungen der erfindungsgemäßen Gläser ergeben sich als
- pharmaprimär Packmittel, insbesondere als Flasche, Spritze oder Ampulle,
- Geräteglas für Laboranwendungen und für den Chemieanlagenbau,
- Verschmelzglas, insbesondere als Verschmelzglas der Fe-CO-Ni-Legierungen,
- Substrat, Superstrat oder Abdeckungen, insbesondere für elektrotechnische Anwendungen, für TFT-, PWP-, OLED-Bildschirme, sowie für die Fotovoltaik,
- als Rohrglas, insbesondere für Lampen, Halogenlampen oder Leuchtstoffrohre oder für solarthermische Anwendungen,
- als Reflektorglas, insbesondere für Lampen, als Architekturglas,
- als temperaturwechselbeständige Gläser, insbesondere für Backofenteile, Kühlschrankteile oder Herdteile.
Es versteht sich, dass die vorstehend genannten und die nachstellend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.
Weitere Vorteile und Merkmale der Erfindung ergeben sich aus der nachfolgenden Beschreibung bevorzugter Ausführungsbeispiele,

### Beispiele

In Tab. 2 sind verschiedene erfindungsgemäße Gläser als Beispiele B1 und B4 bis B6 in ihrer Zusammensetzung in Gewichtsprozent zusammengefasst. Die Gläser B4, B5 sind ähnlicher Zusammensetzung, liegen jedoch nicht mehr in der ersten Säureklasse.
Die Gläser B2 und B3 sind nicht von der Erfindung umfasst.

**Tab. 2**

| **Bestandteil (Gew.-%)** | **B1** | **B2** | **B3** | **B4** | **B5** | **B6** |
|---|---|---|---|---|---|---|
| **SiO₂** | 66.0 | 69.0 | 71.2 | 65.8 | 66.0 | 68.0 |
| **Al₂O₃** | 14.5 | 16.0 | 12.0 | 14.3 | 14.5 | 12.2 |
| **Na₂O** | 4.0 | 7.2 | 5.0 | 4.0 | 4.0 | 4.0 |
| **MgO** | 6.5 | 3.2 | 3.2 | 5.6 | 6.5 | 6.5 |
| **CaO** | 9.0 | 4.6 | 4.6 | 9.3 | 9.0 | 9.0 |
| **ZnO** | | | 4.0 | | | |
| **SnO₂** | | | | | | 0.3 |
| **F** | | | | 1.0 | | |
| α _{20/300} | 5.18 | 5.57 | 4.80 | 5.08 | 4.97 | 2.51 |
| **Dichte** | 2.5116 | 2.4344 | 2.4722 | 2.5091 | 2.5128 | 2.5091 |
| **Tg** | 705 | 696 | 688 | 672 | 712 | 703 |
| **T7,6** | 921 | 963 | 958 | 906 | 931 | 920 |
| **T4** | 1241 | 1362 | 1348 | 1239 | 1250 | 1249 |
| **H** | 16 | 21 | 013 | 22 | 26 | 18 |
| **S** | 0.6 | 0.6 | 0.5 | 0.9 | 0.8 | 0.5 |
| **L** | 74 | 69 | 67 | 80 | 79 | 67 |

Ferner sind die folgenden Eigenschaften angegeben: α_{20/300} in 10⁻⁶/K, die Glastransformationstemperatur Tg in °C, die Erweichungstemperatur T7,6 in °C, die Verarbeitungstemperatur T4 in °C. Die hydrolytische Beständigkeit H ist als basenäquivalenter Säureverbrauch in µg Na₂O/g Glasgries angegeben, die Säurebeständigkeit des Abtragswertes S nach Säureangriff in mg/dm² und die Laugenbeständigkeit L in Form des Abtragswertes bei Laugenangriff in mg/dm².

Tab. 3 enthält die Glaszusammensetzungen der Gläser B1 bis B6 in Molprozent.

**Tab. 3**

| **Bestandteil (Mol-%)** | **B1** | **B2** | **B3** | **B4** | **B5** | **B6** |
|---|---|---|---|---|---|---|
| **SiO₂** | 67.5 | 72.5 | 74.3 | 66.1 | 67.5 | 69.0 |
| **Al₂O₃** | 8.7 | 9.9 | 7.4 | 8.5 | 8.7 | 7.3 |
| **Na₂O** | 4.0 | 7.3 | 5.1 | 3.9 | 4.0 | 3.9 |
| **MgO** | 9.9 | 5.0 | 5.0 | 8.4 | 9.9 | 9.8 |
| **CaO** | 9.9 | 5.2 | 5.1 | 10.0 | 9.9 | 9.8 |
| **ZnO** | | | 3.1 | | | |
| **SnO₂** | | | | | | 0.1 |
| **F** | | | | 3.2 | | |

Die Gläser wurden durch Schmelzen üblicher Rohstoffe in einem induktiv beheizten Pt/Rh-Tiegel (Pt20Rh) bei 1650°C erschmolzen. Die Schmelzdauer betrug drei bis vier Stunden. Anschließend wurde die Schmelze zur Homogenisierung eine Stunde bei 1600°C gerührt und danach zwei Stunden bei dieser Temperatur ohne Rühren stehen gelassen, um evtl. vorhandene Blasen zur Oberfläche aufsteigen zu lassen. Die Schmelze wurde mit einer definierten Kühlrate von 30 K/h abgekühlt.

Zur Prüfung der Entglasung wurd das Glas B1 bei 1500°C dreißig Minuten aufgeschmolzen und in einem Gradientenofen fünf Stunden lang getempert. Im Temperaturbereich von 1150°C bis 1423°C wurde keine definierte Entglasung beobachtet.

Die Gläser B1, B2, B3 und B5 weisen alle eine hydrolytische Beständigkeit in der Klasse 1 auf. Bei den Gläsern B1 bis B3 liegt ferner die Säurebeständigkeit in der Klasse 1 und die Laugenbeständigkeit gleichfalls in der Klasse 1.

Allerdings weisen die Gläser B2, B3 eine relativ hohe Verarbeitungstemperatur auf, was eine wirtschaftliche Herstellbarkeit benachteiligt.

Das Glas B5 entspricht von der Zusammensetzung her dem Glas B1, jedoch wurde hier 1 % Na₂O als Läutermittel in Form von Kochsalz, NaCl, eingeführt. Die Blasenqualität von B5 ist ähnlich gut wie die von B1, soweit man dies bei der Herstellung als Laborglas erkennen kann.

Jedoch verschlechtert sich die Säurebeständigkeit durch den Zusatz von Chlorid etwas und liegt bereits in der 2. Säureklasse. Der Einsatz von Chloriden kann jedoch aus folgendem Grund auch problematisch sein. Bei der Wiedererwärmung kann es zu Verdampfungen von Chloriden mit anschließender Kondensation auf den Glaspartikeln kommen. Dieses Phänomen ist z.B. bei der Ablängung von Rohren (vor der Lampenherstellung) unter dem Begriff "Lampenringe" bekannt. Daher sollte der Zusatz von Chloriden möglichst gering gehalten werden.

Alternativ können jedoch auch andere bekannte Läuterverfahren eingesetzt werden, z.B. die Sulfatläuterung und das Hochtemperatur-Boosting. Das Glas B4 zeigt im Vergleich zum Glas B1, dass durch den Zusatz von Fluoriden sowohl die Erweichungstemperatur T7,6 als auch die Verarbeitungstemperatur T4 abgesenkt werden kann. Die Säurebeständigkeit wird leicht verschlechtert, und liegt bereits in der 2. Säurebeständigkeitsklasse.

Der Einsatz von Fluoriden kann wie auch bei Chloriden durch die leichte Flüchtigkeit bei der Heißumformung zu Verdampfungs- und Kondensationserscheinungen führen und ggf. die Wannenstandfestigkeit reduzieren. Auch können Fluoride durch die Einwirkung wässriger oder anderer Lösungen aus dem Glas in die Flüssigkeit austreten und dort unerwünschte Reaktionen mit den Inhaltsstoffen hervorrufen.

Der Fluoridanteil sollte daher möglichst gering gehalten werden und die Obergrenze von 1,5 Gew.-% nicht übersteigen.

In Tab. 4 sind als Vergleichsbeispiele V1 bis V4 aus in der Literatur bekannten Zusammensetzungen dargestellt, die im Labormaßstab erschmolzen wurden.

V1 ist aus Salama S.N., Salman S.M. und Gharid S., J. Non-Cryst. Solids, 1987, Vol. 93, Nr. 1, Seite 203, entnommen. V2 aus Zdaniewski W., J. Am. Ceram. Soc., 1975, Vol. 58, Nr. 5-6, Seite 163. V3 ist das Beispiel 2 aus der US 5,508,237. V4 ist das Beispiel 6 aus der US 5,508,237.

Die Gläser wurden durch Schmelzen üblicher Rohstoffe in einem induktiv beheizten Pt/Rh-Tiegel (Pt20Rh) bei 1650°C erschmolzen. Die Schmelzdauer betrug drei bis vier Stunden. Anschließend wurde die Schmelze zur Homogenisierung eine Stunde bei 1600°C gerührt und danach zwei Stunden bei dieser Temperatur ohne Rühren stehen gelassen, um evtl. vorhandene Blasen zur Oberfläche aufsteigen zu lassen. Die Schmelze wurde mit einer definierten Kühlrate von 30 K/h abgekühlt. Die übrigen Eigenschaften sind in den gleichen Einheiten wie bei Tab. 2 angegeben.

**Tab. 4**

| Bestandteil (Gew.-%) | V1 | V2 | V3 | V4 |
|---|---|---|---|---|
| SiO₂ | 60.68 | 59.83 | 65.90 | 65.70 |
| Al₂O₃ | 28.08 | 17.09 | 13.00 | 8.00 |
| Li₂O | 2.74 | | | |
| MgO | 8.50 | 8.55 | | |
| CaO | | | | 5.70 |
| SrO | | | 0.40 | 12.90 |
| BaO | | | 20.70 | 7.70 |
| TiO₂ | | 5.98 | | |
| CeO₂ | | 8.55 | | |
| α _{20/300} | 3.92 | 3.33 | | 5.00 |
| Dichte | 2.4934 | 2.6557 | | 2.7337 |
| Tg | 721 | 762 | | 757 |
| T7,6 | entglast | entglast | | 989 |
| T4 | 1228 | 1259 | | 1323 |
| H | 14 | 12 | | 13 |
| S | 31 | 116 | | 0.6 |
| L | 115 | 142 | | 91 |

V1 und V2 sind sehr stabil gegen einen Wasserangriff, jedoch weit entfernt vom Ziel der 1. Säureklasse (Gewichtsverlust bis 0,7 mg/dm²) bzw. der 2. Säureklasse (Gewichtsverlust bis 1,5 mg/dm²). Die Schmelze von V3 war sehr zäh, weshalb kein geeigneter Glasblock gegossen werden konnte. V4 ist ein boroxidfreies Glas, das eine hydrolytische und Säurebeständigkeit in der Klasse 1 und eine Laugenbeständigkeit in der Klasse 2 aufweist. Jedoch ist die Verarbeitungstemperatur T4 mit über 1320°C zu hoch für eine wirtschaftliche Produktion in kommerziellen Schmelzaggregaten. Außerdem sind für Neutralgläser hohe Anteile an SrO und BaO unerwünscht, da die Gefahr von Ausfällungen mit schwefelhaltigen Arzneimitteln (Sulfonen, Sulfaten und dergleichen) besteht.

In Tab. 5 sind weitere Vergleichsbeispiele G1 bis G17 von Aluminosilikatgläsern mit der Zusammensetzung in Gewichtsprozent zusammengestellt.

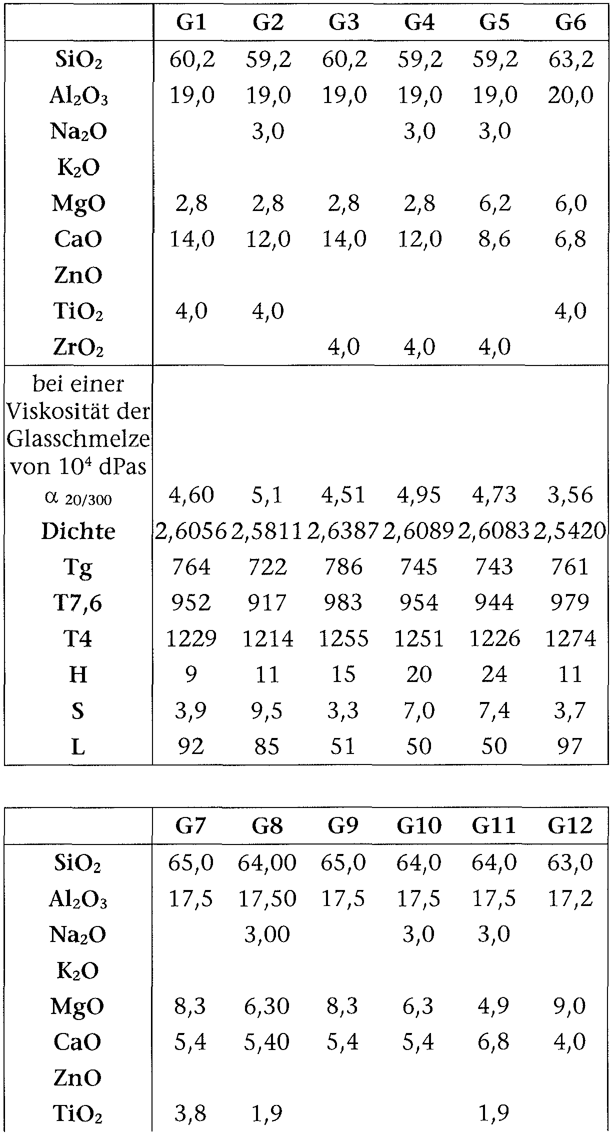

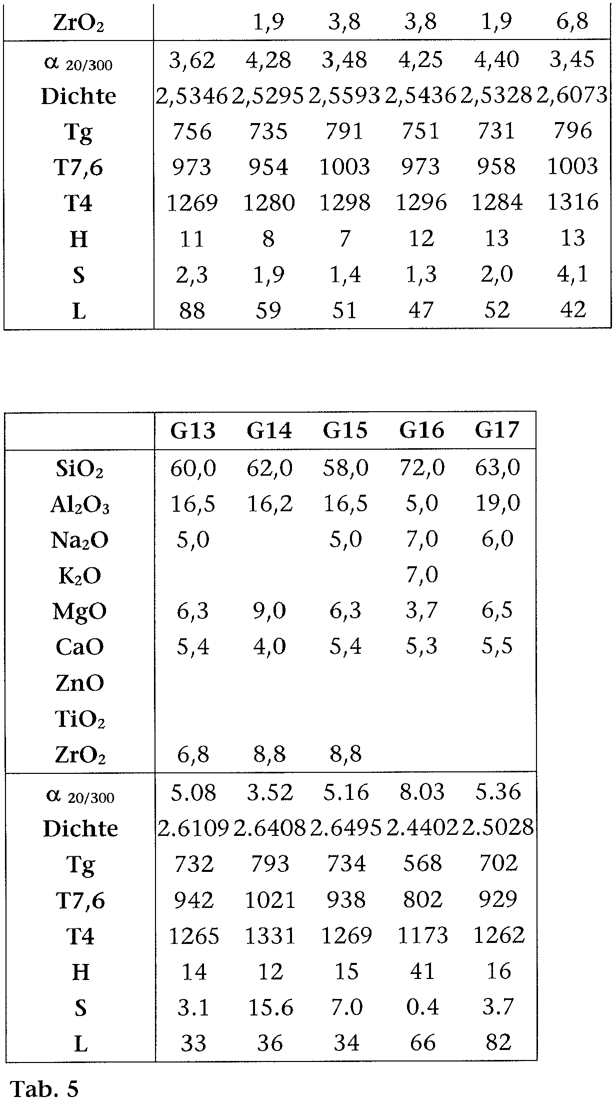

Diese Gläser enthalten zum Teil größere Anteile von TiO₂ und/oder ZrO₂, weil deren positive Wirkung auf die Glasbeständigkeit von anderen Gläsern bekannt ist. Die Beispiele zeigen, dass auf diese Weise hyddrolytisch stabile Gläser erhalten werden können, insbesondere wenn die Komponente TiO₂ in größeren Anteilen vorhanden ist. Auch können Gläser erhalten werden, die in der Laugenbeständigkeit in der 1. Klasse liegen, besonders wenn die Komponente ZrO₂ in größeren Anteilen vorliegt. Jedoch erreichen die Gläser mit diesen Komponenten, egal ob einzeln oder zusammen, nicht die geforderte 1. Säureklasse.

Wie sich aus den erfindungsgemäßen Gläsern B1 bis B3 gemäß Tab. 2 ergibt, sind Zusätze von TiO₂ oder ZrO₂ auch gar nicht notwendig. Kleinere Zusätze können sich jedoch positiv auswirken.

## Patentansprüche

1. Glas, das zumindest die folgenden Bestandteile (in Gew.-% auf Oxidbasis) enthält:
| | |
|---|---|
| SiO₂ | 65 - 72 |
| Al₂O₃ | 11 - 17 |
| Na₂O | 0,1 - 8 |
| MgO | 3-8 |
| CaO | 7,1 - 12 |
| ZnO | 0 - 10 |
| BaO | ≤ 0,5, |
wobei das Gewichtsverhältnis CaO/MgO 1,4 bis 1,8 beträgt,
wobei bis auf unvermeidbare Verunreinigungen kein B₂O₃, SrO, BaO, ZrO₂ und PbO enthalten ist,
wobei eine hydrolytische Beständigkeit nach DIN ISO 719 in der 1. hydrolytischen Klasse gegeben ist,
wobei eine Säurebeständigkeit nach DIN 12116 mindestens in der 2. Säureklasse gegeben ist und
wobei eine Laugenbeständigkeit nach DIN ISO 695 in mindestens der 2. Laugenklasse gegeben ist.

2. Glas das zumindest die folgenden Bestandteile (in Gew.-% auf Oxidbasis) enthält:
| | |
|---|---|
| SiO₂ | 65 - 72 |
| Al₂O₃ | 11 - 17 |
| Na₂O | 0 - 8 |
| K₂O | 0 - 2 |
| MgO | 3 - 8 |
| CaO | 7,1 - 12 |
| ZnO | 0,1 - 10 |
| BaO | ≤ 0,5, |
wobei das Gewichtsverhältnis CaO/MgO 1,4 bis 1,8 beträgt,
wobei bis auf unvermeidbare Verunreinigungen kein B₂O₃, SrO, BaO, ZrO₂ und PbO enthalten ist,
wobei eine hydrolytische Beständigkeit nach DIN ISO 719 in der 1. hydrolytischen Klasse gegeben ist,
wobei eine Säurebeständigkeit nach DIN 12116 in der 1. Säureklasse gegeben ist und
wobei eine Laugenbeständigkeit nach DIN ISO 695 mindestens in der 2. Laugenklasse gegeben ist.

3. Glas nach Anspruch 1 oder 2, bei dem der Gehalt an Na₂O 0,5 bis 8 Gew.-%, bevorzugt 1 bis 8 Gew.-%, weiter bevorzugt 2 bis 8 Gew.-%, und besonders bevorzugt 2 bis 6 Gew.-% ist.

4. Glas nach einem der vorhergehenden Ansprüche, bei dem der Gehalt an CaO größer 7,1 bis 12 Gew.-%, bevorzugt 8 bis 12 Gew.-%, und besonders bevorzugt 8 bis 11 Gew.-% ist.

5. Glas nach einem der vorhergehenden Ansprüche, bei dem der Gehalt an ZnO 3 bis 10 Gew.-%, bevorzugt 4 bis 10 Gew.-%, und besonders bevorzugt 6 bis 10 Gew.-% ist.

6. Glas nach einem der vorhergehenden Ansprüche, bei dem der Gehalt an Al₂O₃ größer 14 bis 17 Gew.-%, bevorzugt 15 bis 17 Gew.-% ist.

7. Glas nach einem der vorhergehenden Ansprüche, das eine Verarbeitungstemperatur T4 von weniger als 1320 °C, weiter bevorzugt von weniger als 1300 °C, besonders bevorzugt von weniger als 1260 °C aufweist.

8. Glas nach einem der vorhergehenden Ansprüche, das ferner 0 bis 2 Gew.-%, vorzugsweise 0,1 - 2 Gew.-% Li₂O enthält.

9. Glas nach einem der vorhergehenden Ansprüche, das ferner 0 bis 10 Gew.-%, vorzugsweise 1 bis 10 Gew.-% TiO₂ enthält.

10. Glas nach einem der vorhergehenden Ansprüche, das ferner 0,01 bis 2 Gew.-%, vorzugsweise 0,1 bis 1,5 Gew.-% an Läutermitteln enthält.

11. Glas nach Anspruch 10, das zumindest ein Läutermittel enthält, das aus der Gruppe ausgewählt ist, die durch As₂O₃, Sb₂O₃, SnO₂, CeO₂, Cl⁻, F⁻ und SO₄²⁻ gebildet ist.

12. Glas nach einem der vorhergehenden Ansprüche, bei dem der Gehalt an As₂O₃, an Sb₂O₃, Cl⁻, F⁻ und SO₄²⁻ jeweils maximal 1,5 Gew.-% beträgt.

13. Glas nach einem der vorhergehenden Ansprüche, bei dem der Gehalt an SnO₂ und an CeO₂ jeweils maximal 1 Gew.-% beträgt.

14. Verwendung eines Glases nach einem der vorhergehenden Ansprüche
- als Pharmaprimärpackmittel, insbesondere als Flasche, Spritze oder Ampulle,
- Geräteglas für Laboranwendungen und für den Chemieanlagenbau,
- Verschmelzglas, insbesondere als Verschmelzglas für Fe-Co-Ni-Legierungen,
- Substrat, Superstrat oder Abdeckung, insbesondere für elektrotechnische Anwendungen, für TFT-, PDP-, OLED-Bildschirme, sowie für die Photovoltaik,
- Rohrglas, insbesondere für Lampen, Halogenlampen oder Leuchtstoffröhren oder für solarthermische Anwendungen,
- Reflektorglas, insbesondere für Lampen,
- Architekturglas,
- temperaturwechselbeständiges Glas, insbesondere für Backofenteile, Kühlschrankteile oder Herdteile.

## Claims

1. Glass containing at least the following constituents (in % by weight, based on oxide):
| | |
|---|---|
| SiO₂ | 65-72 |
| Al₂O₃ | 11-17 |
| Na₂O | 0.1-8 |
| MgO | 3-8 |
| CaO | 7.1-12 |
| ZnO | 0-10 |
| BaO | ≤ 0.5 |
wherein the weight ratio CaO/MgO is 1.4 to 1.8,
wherein no B₂O₃, SrO, BaO and PbO are present, apart from unavoidable impurities,
wherein a hydrolytic resistance in accordance with DIN ISO 719 in hydrolytic class 1 is obtained,
wherein an acid resistance in accordance with DIN 12116 at least in acid class 2 is obtained, and
wherein an alkali resistance in accordance with DIN ISO 695 at least in alkali class 2 is obtained.

2. Glass containing at least the following constituents (in % by weight, based on oxide):
| | |
|---|---|
| SiO₂ | 65-72 |
| Al₂O₃ | 11-17 |
| Na₂O | 0-8 |
| K₂O | 0-2 |
| MgO | 3-8 |
| CaO | 7.1-12 |
| ZnO | 0.1-10 |
| BaO | ≤ 0.5 |
wherein the weight ratio CaO/MgO is 1.4 to 1.8,
wherein no B₂O₃, SrO, BaO and PbO are present, apart from unavoidable impurities,
wherein a hydrolytic resistance in accordance with DIN ISO 719 in hydrolytic class 1 is obtained,
wherein an acid resistance in accordance with DIN 12116 in acid class 1 is obtained, and
wherein an alkali resistance in accordance with DIN ISO 695 at least in alkali class 2 is obtained.

3. Glass according to Claim 1 or 2, wherein the Na₂O content is 0.5 to 8% by weight, preferably 1 to 8% by weight, further preferably 2 to 8% by weight and particularly preferably 2 to 6% by weight.

4. Glass according to one of the preceding claims, wherein the CaO content is greater than 7.1 to 12% by weight, preferably 8 to 12% by weight and particularly preferably 8 to 11% by weight.

5. Glass according to one of the preceding claims, wherein the ZnO content is 3 to 10% by weight, preferably 4 to 10% by weight and particularly preferably 6 to 10% by weight.

6. Glass according to one of the preceding claims, wherein the Al₂O₃ content is greater than 14 to 17% by weight, preferably 15 to 17% by weight.

7. Glass according to one of the preceding claims, which has a working point T4 of less than 1320°C, further preferably of less than 1300°C, particularly preferably of less than 1260°C.

8. Glass according to one of the preceding claims, which further contains 0 to 2% by weight, preferably 0.1-2% by weight, Li₂O.

9. Glass according to one of the preceding claims, which further contains 0 to 10% by weight, preferably 1 to 10% by weight, TiO₂.

10. Glass according to one of the preceding claims, which further contains 0.01 to 2% by weight, preferably 0.1 to 1.5% by weight, refining agents.

11. Glass according to Claim 10, which contains at least one refining agent selected from the group consisting of As₂O₃, Sb₂O₃, SnO₂, CeO₂, Cl⁻, F⁻ and SO₄²⁻

12. Glass according to one of the preceding claims, wherein the maximum content of each of As₂O₃, Sb₂O₃, Cl⁻, F⁻ and SO₄²⁻ is 1.5% by weight.

13. Glass according to one of the preceding claims, wherein the maximum content of each of SnO₂ and CeO₂ is 1% by weight.

14. Use of the glass according to one of the preceding claims
- as primary pharmaceutical packaging material, in particular as a bottle, syringe or ampoule,
- as laboratory glass and as chemical glass,
- as sealing glass, in particular as sealing glass for Fe-Co-Ni alloys,
- as a substrate, superstrate or cover, in particular for electrotechnical applications, for TFT, PDP and OLED screens and for photovoltaics,
- as tubing glass, in particular for lamps, halogen lamps or fluorescent tubes or for solar-thermal applications,
- as reflector glass, in particular for lamps,
- as architectural glass,
- as thermal-shock-resistant glass, in particular for parts of baking ovens, refrigerators or cookers.

## Revendications

1. Verre, qui contient au moins les constituants suivants (en % en poids en termes d'oxyde) :
| | |
|---|---|
| SiO₂ | 65 à 72 |
| Al₂O₃ | 11 à 17 |
| Na₂O | 0,1 à 8 |
| MgO | 3 à 8 |
| CaO | 7,1 à 12 |
| ZnO | 0 à 10 |
| BaO | ≤ 0,5, |
le rapport en poids CaO/MgO étant de 1,4 à 1,8,
à l'exception des impuretés inévitables, aucun B₂O₃, SrO, BaO, ZrO₂ et PbO n'étant contenus,
la résistance hydrolytique selon DIN ISO 719 se situant dans la classe hydrolytique 1,
la résistance aux acides selon DIN 12116 se situant au moins dans la classe d'acides 2 et
la résistance aux bases selon DIN ISO 695 se situant au moins dans la classe de bases 2.

2. Verre, qui contient au moins les constituants suivants (en % en poids en termes d'oxyde) :
| | |
|---|---|
| SiO₂ | 65 à 72 |
| Al₂O₃ | 11 à 17 |
| Na₂O | 0 à 8 |
| K₂O | 0 à 2 |
| MgO | 3 à 8 |
| CaO | 7,1 à 12 |
| ZnO | 0,1 à 10 |
| BaO | ≤ 0,5, |
le rapport en poids CaO/MgO étant de 1,4 à 1,8,
à l'exception des impuretés inévitables, aucun B₂O₃, SrO, BaO, ZrO₂ et PbO n'étant contenus,
la résistance hydrolytique selon DIN ISO 719 se situant dans la classe hydrolytique 1,
la résistance aux acides selon DIN 12116 se situant dans la classe d'acides 1 et
la résistance aux bases selon DIN ISO 695 se situant au moins dans la classe de bases 2.

3. Verre selon la revendication 1 ou 2, dans lequel la teneur en Na₂O est de 0,5 à 8 % en poids, de préférence de 1 à 8 % en poids, de manière davantage préférée de 2 à 8 % en poids et de manière particulièrement préférée de 2 à 6 % en poids.

4. Verre selon l'une quelconque des revendications précédentes, dans lequel la teneur en CaO est de plus de 7,1 à 12 % en poids, de préférence de 8 à 12 % en poids et de manière particulièrement préférée de 8 à 11 % en poids.

5. Verre selon l'une quelconque des revendications précédentes, dans lequel la teneur en ZnO est de 3 à 10 % en poids, de préférence de 4 à 10 % en poids et de manière particulièrement préférée de 6 à 10 % en poids.

6. Verre selon l'une quelconque des revendications précédentes, dans lequel la teneur en Al₂O₃ est de plus de 14 à 17 % en poids, de préférence de 15 à 17 % en poids.

7. Verre selon l'une quelconque des revendications précédentes, qui présente une température d'usinage T4 inférieure à 1 320 °C, de manière davantage préférée inférieure à 1 300 °C, de manière particulièrement préférée inférieure à 1 260 °C.

8. Verre selon l'une quelconque des revendications précédentes, qui contient en outre 0 à 2 % en poids, de préférence 0,1 à 2 % en poids de Li₂O.

9. Verre selon l'une quelconque des revendications précédentes, qui contient en outre 0 à 10 % en poids, de préférence 1 à 10 % en poids de TiO₂.

10. Verre selon l'une quelconque des revendications précédentes, qui contient en outre 0,01 à 2 % en poids, de préférence 0,1 à 1,5 % en poids d'agents d'affinage.

11. Verre selon la revendication 10, qui contient au moins un agent d'affinage, qui est choisi dans le groupe formé par As₂O₃, Sb₂O₃, SnO₂, CeO₂, Cl⁻, F⁻ et SO₄²⁻

12. Verre selon l'une quelconque des revendications précédentes, dans lequel la teneur en As₂O₃, Sb₂O₃, Cl⁻, F⁻ et SO₄²⁻ est à chaque fois d'au plus 1,5 % en poids.

13. Verre selon l'une quelconque des revendications précédentes, dans lequel la teneur en SnO₂ et en CeO₂ est à chaque fois d'au plus 1 % en poids.

14. Utilisation d'un verre selon l'une quelconque des revendications précédentes
- en tant qu'emballage primaire pharmaceutique, notamment en tant que bouteille, seringue ou ampoule,
- verre pour appareils pour applications de laboratoires et pour la construction d'installations chimiques,
- verre pour la fusion, notamment en tant que verre pour la fusion pour alliages Fe-Co-Ni,
- substrat, superstrat ou recouvrement, notamment pour applications électrotechniques, pour écrans TFT, PDP, OLED, ainsi que pour la photovoltaïque,
- verre pour tubes, notamment pour lampes, lampes halogènes ou tubes fluorescents ou pour applications solaires thermiques,
- verre pour réflecteurs, notamment pour lampes,
- verre architectural,
- verre résistant aux changements de température, notamment pour parties de fours de cuisson, parties de réfrigérateurs ou parties de cuisinières.
